# FASCICULE DE BREVET EUROPEEN

(11) **EP 1 217 272 B1**
(45) Date de publication et mention de la délivrance du brevet: **12.01.2005**
(21) Numéro de dépôt: 00127788.8
(22) Date de dépôt: 19.12.2000
(51) Int. Cl.: F16K 31/06

(54) **Electrovanne**
Elektromagnetventil
Electromagnetic valve

(43) Date de publication de la demande: 26.06.2002
(73) Titulaire: FLUID AUTOMATION SYSTEMS S.A., CH-1290 Versoix (CH)
(72) Inventeur: Seuret, Christophe, 1180 Rolle (CH); Junod, Florent, 1260 Nyon (CH); Maier, Michael, 1290 Versoix (CH); Helbling, Adrien, 1222 Vésenaz (CH)
(74) Mandataire: KIRKER & Cie S.A.

(56) Documents cités:
- DE-A- 4 132 816
- FR-A- 2 671 597
- US-A- 5 501 425
- US-A- 5 547 165

## Description

La présente invention se rapporte aux électrovannes. Les électrovannes actuelles comportent majoritairement un électroaimant à piston, ce qui permet une construction relativement simple et l'obtention de bonnes performances pour des activateurs de volume important, soit plus de 2 centimètres cubes au moins. Ces électrovannes connues présentent plusieurs inconvénients provenant de la masse importante du plongeur ainsi que des frottements latéraux à l'intérieur de l'âme de la bobine. De plus, l'utilisation habituelle d'un ressort hélicoïdal linéaire agissant sur le plongeur pour maintenir la vanne en position fermée est également un inconvénient majeur. En effet, ce ressort doit être dimensionné pour pouvoir vaincre la rémanence du matériau du noyau fixe attirant le plongeur. La force nécessaire à étancher la buse est dans le cadre de microvannes beaucoup plus faible. En appliquant ainsi par le ressort hélicoïdal linéaire une force élevée sur le système clapet-buse, dimensionnée pour décoller le plongeur du noyau fixe, on provoque une détérioration rapide du clapet et on augmente inutilement la puissance électrique nécessaire à la commutation de la vanne. La majorité des électrovannes présentent une construction où la détermination de la course du plongeur, laquelle détermine le débit de la vanne, dépend des dimensions d'un nombre important de pièces. On parle ainsi de superposition de cotes déficiente; en tenant compte des tolérances de fabrication des pièces qui influent sur la distance de déplacement du plongeur, il devient très difficile de reproduire plusieurs vannes à débits identiques lorsque la course est définie à 200 microns ou moins.

Une électrovanne de l'état de la technique est montrée dans le document FR 2 671 597 A.

Un des problèmes de la construction des électrovannes présentes sur le marché actuellement réside dans les méthodes de connexion externe électrique et pneumatique. Une grande partie des électrovannes présente des fils à plusieurs brins comme système de connexion électrique externe, sur lesquels sont enroulés directement le bout des fils de la bobine. Ce système présente plusieurs désavantages; sa production est très difficile à automatiser, elle requiert beaucoup de main d'oeuvre. Dans le cadre d'un activateur à électroaimant plat, le diamètre externe de la vanne doit être augmenté ou l'épaisseur de la bobine diminuée, afin d'intégrer les fils et les épissures à l'intérieur du noyau fixe 1.

Dans une autre partie des électrovannes existantes, les bouts des fils de la bobine sont soudés sur des picots, lesquels sont reliés à un deuxième connecteur agissant comme connecteur électrique externe.

La majorité des électrovannes se fixent sur leur embase pneumatique par des vis. Lorsque les dimensions de la vanne sont très réduites, il est très difficile d'intégrer ce type de fixation.

Le but de la présente invention est de permettre la réalisation d'une électrovanne miniature obviant aux inconvénients précités, volume de l'activateur, pertes par friction dans celui-ci, complexité de construction, superposition d'un nombre de cotes important, difficultés de montage et détérioration du clapet de fermeture par une force d'appui trop élevée. La construction des électrovannes présentées dans ce brevet optimise les forces de l'électroaimant en fonction des dimensions extérieures du système. La miniaturisation de la vanne oblige à chaque pièce d'assurer plusieurs fonctions.

La présente invention a pour objet une électrovanne miniature qui se distingue par les caractéristiques énoncées à la revendication 1.

Les dessins annexés illustrent schématiquement et à titre d'exemple quelques formes d'exécution de l'électrovanne selon l'invention.
Les figures 1a, 1b et 1c sont des coupes schématiques d'électrovannes à électroaimant plat constituées d'un noyau fixe 1, d'une bague 10 et d'un corps 16.
Les figures 2a, 2b, 2c, 2d, 2e présentent différents exemples d'intégration de la vanne construite selon la configuration 1a à l'embase. Les mêmes systèmes d'intégration peuvent être utilisés pour des vannes construites selon les configurations 1b et 1c. La figure 2f montre un système de compensation de pression monté dans une vanne à activateur électromagnétique plat. La figure 2g présente une électrovanne à électroaimant plat intégrant une membrane de séparation.
Les figures 3a et 3b illustrent deux types de formes de ressorts plats adaptés à la conception de vanne décrite dans ce brevet.
Les figures 4a et 4b montrent deux possibilités de protection du solénoïde du fluide.
Les figures 5a et 5b illustrent un système d'intégration de la partie retenue d'un connecteur électrique mâle.
La figure 6 illustre un système de connexion électrique par contacteurs, lequel maintient également la vanne sur son embase.
La figure 7 présente un système de compensation de la dilatation du clapet monté sur un plongeur plat.

L'activateur des électrovannes illustrées se compose d'un électroaimant formé d'un noyau fixe 1 dans lequel est logée une bobine 2, et d'un plongeur plat 3 retenu par un ressort plat 13. La bobine 2 est de type autoportée et est collée sur un élément 4 durant la phase de solidification des fils de la bobine, la maintenant en position dans le noyau fixe 1 et servant de support aux deux picots 5 sur lesquels les bouts des fils du solénoïde sont enroulés et qui serviront également de connecteur électrique à l'électrovanne.

Le noyau fixe 1 présente une forme cylindrique droite et comporte sur la surface cylindrique externe un épaulement 6.

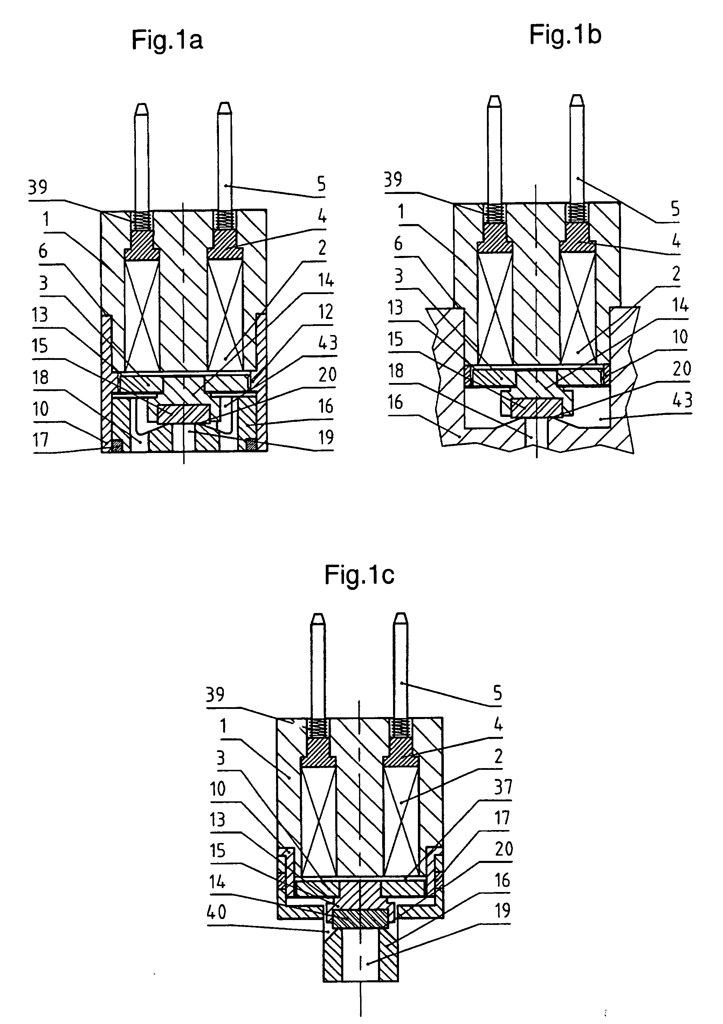

La partie inférieure du noyau fixe 1 est introduite dans une bague intermédiaire 10 (fig. 1a) ou directement dans le corps (fig. 1b). Un joint O-ring 11 peut être logé entre la tranche supérieure de cette bague intermédiaire 10 (fig. 1a) ou du corps 16 (fig. 1b) et l'épaulement 6 du noyau fixe 1. Cette bague intermédiaire 10 s'étend au-delà de l'extrémité active du noyau fixe 1, elle comporte un flasque interne 12 servant de retenue au plongeur plat. Dans certaines formes d'exécution la bague intermédiaire 10 est venue d'une seule pièce de fabrication avec le noyau fixe 1.

Un obturateur 14 comportant un clapet 15 est solidaire du plongeur plat 3. Un ressort 13 est fixé entre le plongeur plat 3 et l'obturateur 14 et est maintenu par sa périphérie contre la face inférieure du flasque interne 12 de la bague intermédiaire 10.

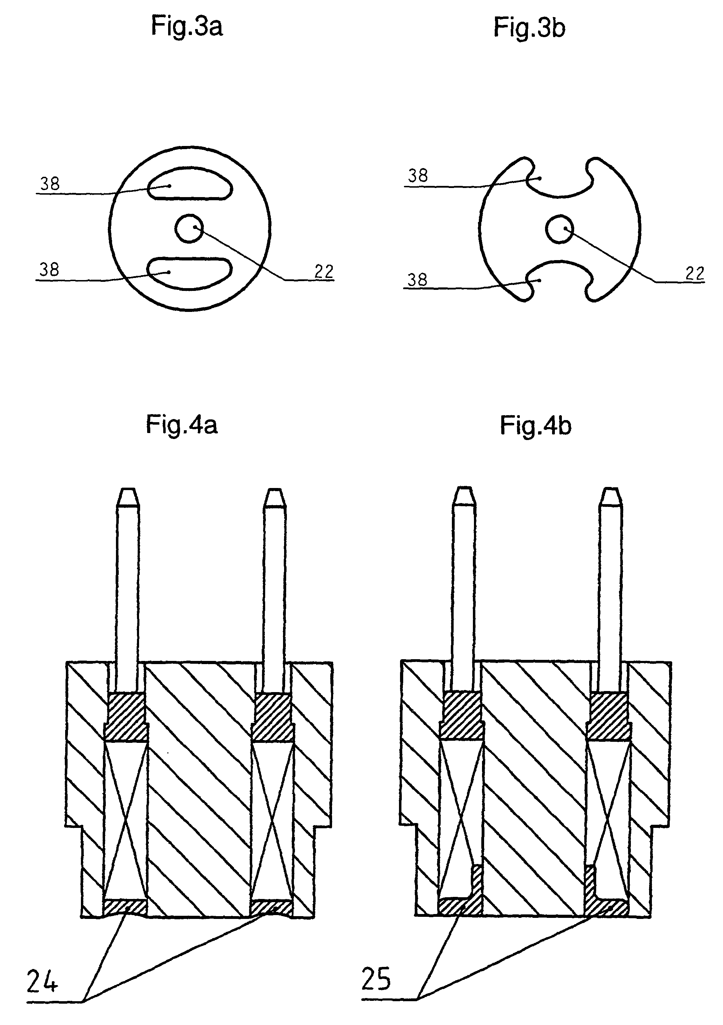

Le ressort 13 est un ressort plat présentant par exemple les formes illustrées aux figures 3a et 3b. Ce ressort 13 comporte un trou central 22 et des ouvertures 38 débouchant sur sa périphérie.

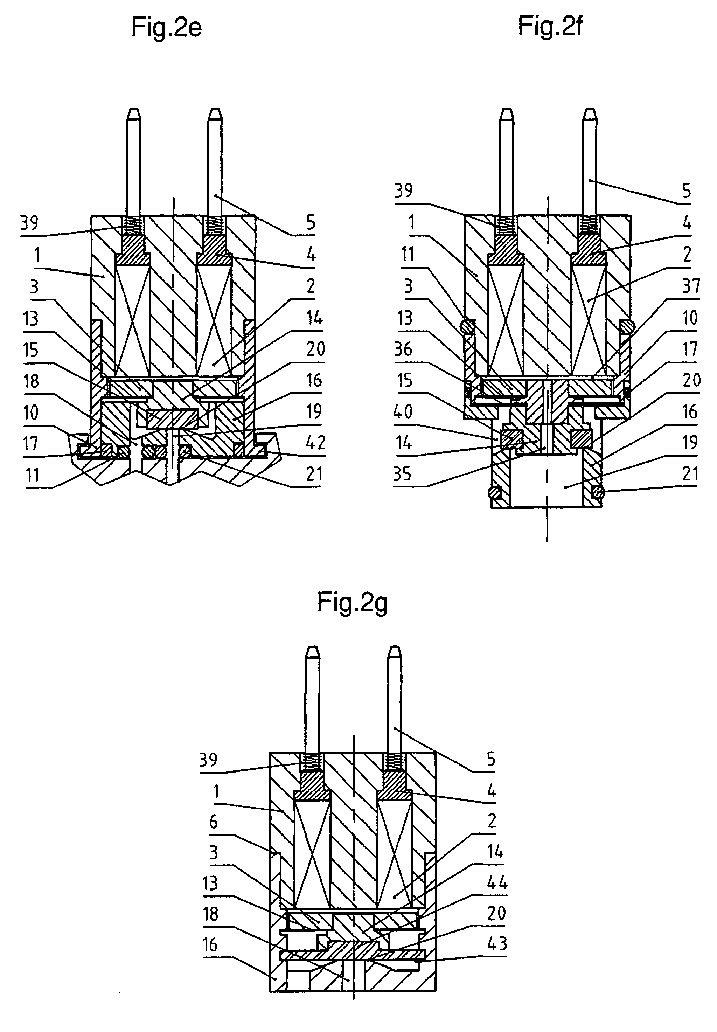

L'électrovanne comporte encore un corps 16 disposé à l'intérieur (figure 1a) ou à l'extérieur (figure 2f ou 1c) de la partie inférieure de la bague intermédiaire 10 (fig. 1a) ou du noyau fixe (fig. 1b). Il est fixé à la bague 10 ou au noyau fixe 1 à l'aide d'une résine synthétique disposée dans une rainure annulaire 17 que comporte ce corps 16. Ce système de fermeture fonctionne très bien, même lorsque le corps est en plastique et la bague en métal; il utilise le principe que le joint de colle adhère au métal et retient mécaniquement le corps lorsque la vanne est sous pression. Le corps de vanne 16 comporte des orifices d'entrée de fluide 18 et un orifice central de sortie du fluide 19. Ce corps 16 définit ainsi avec le noyau fixe 1 une chambre 43 alimentée en fluide par les orifices 18 et pouvant délivrer du fluide par l'orifice 19, orifice qui comporte un siège ou buse 20 coopérant avec le clapet 15 de l'obturateur.

L'électrovanne est conçue pour être fermée en position de repos, c'est-à-dire lorsque l'électroaimant 1,2 n'est pas sous tension. Dans cette position le piston plat 3 est décollé du noyau fixe 1 et est appliqué avec une faible force par le ressort 13 contre la buse 20 qui est ainsi obturée de façon étanche par le clapet 15. La force d'appui du clapet 15 contre la buse 20, définie par le ressort 13, est déterminée pour un ressort 13 donné par la distance séparant la buse 20 du flasque interne 12 de la bague intermédiaire et la distance de la face libre du clapet 15 toujours comptée par rapport à ce flasque interne 12. Cette force d'appui peut être faible pour préserver le clapet 15 et pour diminuer la puissance électrique de fonctionnement. Cette force d'appui du clapet 15 sur la buse 20 peut être déterminée indépendamment de la force nécessaire pour décoller le plongeur plat 3 de l'électroaimant 1,2, pour vaincre la force de rémanence, car en effet la force de décollage du plongeur 3 est déterminée par la distance séparant la face active de l'électroaimant 1,2 du plan du ressort 13, donc du flasque 12 et par la forme et l'épaisseur du ressort plat 13. Par cette construction on peut donc créer avec un même ressort plat 13 une force élevée de décollage du plongeur 3 et une force faible d'appui du clapet 15 sur la buse 20.

Dans la forme d'exécution illustrée en plan aux figures 3a et 3b, le ressort 13 se présente sous la forme d'un disque comportant un trou 22 au centre et des ouvertures 38 périphériques délimitant deux bras de flexion. Les bras peuvent être reliés et appuyés sur toute la circonférence de l'épaulement (figure 3a) ou sur une partie de celle-ci seulement (figure 3b). Les parties périphériques de ce disque ressort sont fixées sur le flasque interne 12, tandis que sa partie centrale est fixée entre l'organe obturateur 14 et le plongeur plat 3. Il est évident que ce disque ressort 13 pourrait présenter d'autres formes dans d'autres réalisations. Ce ressort 13 peut présenter des dimensions et des caractéristiques permettant un fonctionnement en régime dit "proportionnel" de la vanne. Dans ce cas, le débit de la vanne peut être réglé en fonction du courant électrique traversant la bobine (2).

Comme illustré aux figures 4a et 4b, la bobine 2 peut être protégée du fluide par un joint de résine 24, par exemple d'une résine réagissant à la lumière, ou par un joint en matière élastomère 25.

Une fois assemblée la vanne est indémontable, de sorte que les paramètres de montage définissant lesdites forces ne peuvent pas être modifiés.

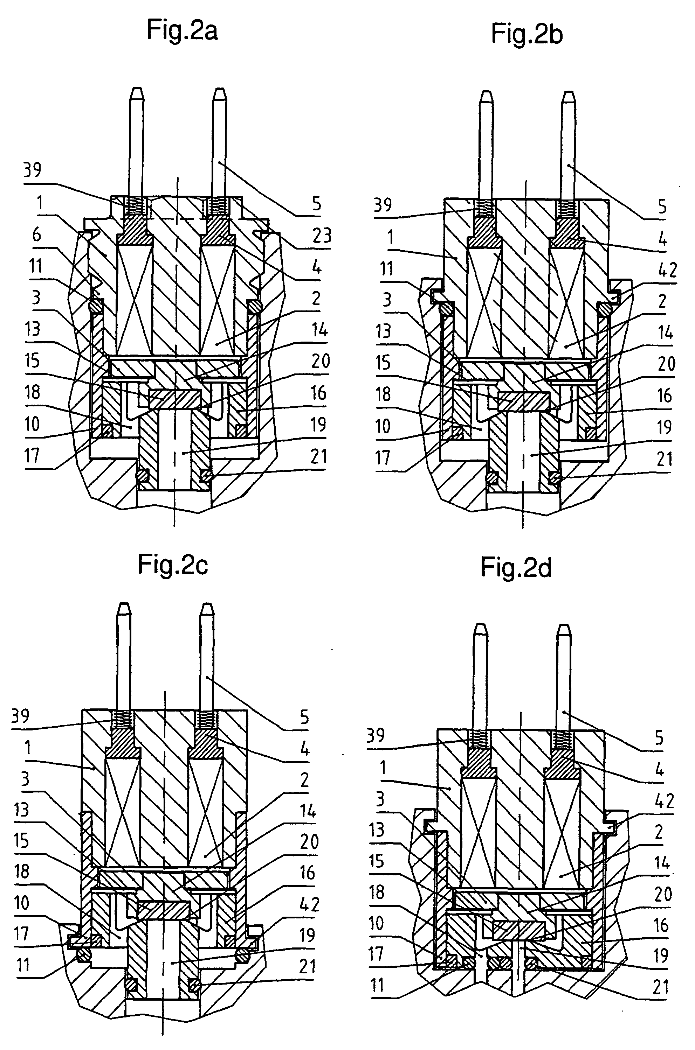

Plusieurs méthodes de connexions pneumatique et électrique sont définies dans le présent brevet. Sur le premier type, présenté à la figure 2a, la vanne se présente sous la forme d'une vis, qui se fixe dans le trou de l'embase. Le filet du pas de vis 7 se situe sur le noyau fixe 1. Ce pas de vis peut être autotaraudant dans certaines exécutions. Une fois en place sur son embase d'utilisation, l'étanchéité est réalisée entre les différents volumes par deux O-rings 11 et 21 assurant une étanchéité parfaite du montage, laquelle est indépendante du serrage de la vanne dans l'embase. Dans ce cas la surface libre du circuit magnétique 1 présente une empreinte femelle non cylindrique 23 qui permet d'entraîner la vanne en rotation à l'aide d'un outil.

Le deuxième système de fixation (figures 2b, 2c, 2d, 2e) consiste à tenir la vanne sur l'embase par un épaulement radial 42 situé au niveau du circuit magnétique 1 ou au niveau de la bague 10. Il peut être axisymétrique ou ne présenter que deux parties afin d'être utilisé comme baïonnette dans un système pneumatique. Les étanchéités entre les différents volumes du système peuvent être assurées par un système d'O-rings radiaux (figures 2b, 2c) ou axiaux (figures 2d, 2e). Dans le cadre d'une construction du type illustré à la figure 1c, l'épaulement 42 peut se situer au niveau du corps plastique.

Une des particularités de la vanne consiste en sa connexion électrique. Elle est équipée de picots 5 sur lesquels sont enroulés et soudés les bouts des fils de la bobine avant son intégration dans le circuit magnétique 1. Les picots sont directement utilisés dans la connexion électrique externe de la vanne.

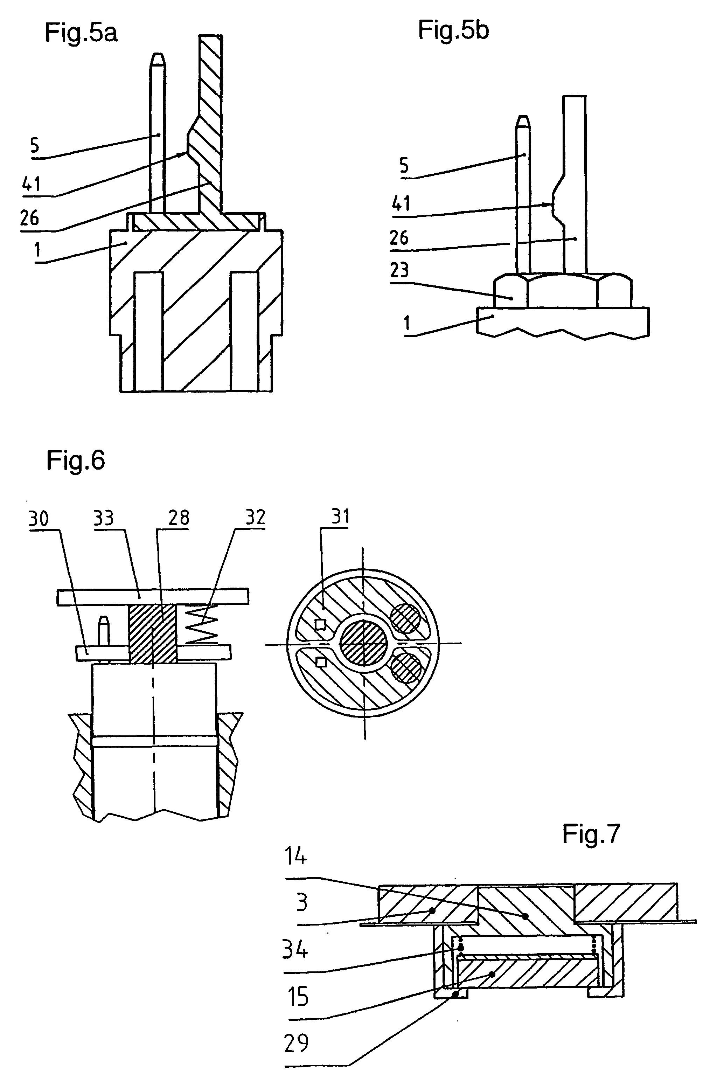

Le premier système de connexion électrique utilise les picots 5 comme fiches du connecteur mâle. Une pièce en plastique 26 vient se placer sur le circuit magnétique, afin de protéger la soudure inférieure 39 et intègre la partie de retenue 41 du connecteur (figures 5a et 5b).

Dans le second système de connexion électrique, les picots sont directement soudés sur une plaquette électronique externe.

Un système additionnel intégrant la connexion électrique et le maintien de la vanne sur son embase pneumatique est présenté à la figure 6. Une plaquette électrique 30 à deux électrodes 31 est soudée sur les picots 5 après le montage final de la vanne. Deux contacteurs à ressort 32 placés sur une plaque externe 33 sont appliqués contre les électrodes 31. Une pièce 28 vient se positionner entre la plaque 33 et la vanne, serrant longitudinalement l'électrovalve dans son embase.

Un système de compensation de dilatation du clapet, par exemple sous l'effet de la température, peut être installé dans le support de clapet (figure 7). Le clapet 15 est monté coulissant sur le support de clapet 14 et ce clapet 15 est soumis à l'action d'un ressort 34 qui est placé entre l'élastomère et la partie supérieure interne du support. Ce ressort 34 appuie le clapet 15 contre l'épaulement inférieur 29 du support de clapet 14. L'élongation du clapet sera interne et sa face en contact avec la buse possédera toujours la même cote.

Le système selon l'invention permet l'intégration d'un système de compensation de la pression agissant sur le clapet lorsque la vanne est fermée (figure 2f). Dans ce cas, le support de clapet 14 est réalisé en deux parties afin de permettre le pinçage d'une membrane d'étanchéité intermédiaire 36. Un trou 35 est percé au milieu du support de clapet afin que la pression sous la buse soit égale à la pression dans la chambre intermédiaire 37. Ce système permet d'équilibrer les forces dues à la pression agissant sur le clapet. Il fonctionne en mode bi-directionnel.

Une membrane peut se loger à l'intérieur de la partie corps 16 de la vanne (fig. 2g), afin d'empêcher le contact entre le fluide et l'activateur électromagnétique, de réduire les volumes morts, donc de créer une valve dite "à medium séparé". Dans ce cas le corps peut être fabriqué en plusieurs pièces.

Les parties métalliques de la vanne en contact avec le fluide peuvent être revêtues d'un film ultra fin de protection par exemple de DLC (carbone amorphe), de polymère ou de céramique. La constante du ressort plat 13 étant progressive, donc amortissante, et la surface de choc entre le plongeur 3 et le noyau fixe étant importante, le risque de détérioration du film fin est très réduit.

De par sa construction et l'utilisation d'un électroaimant à plongeur plat, le volume de l'électrovanne peut être réduit et les forces de friction entre noyau et plongeur éliminées. De plus, grâce au disque ressort, on peut appliquer le clapet contre sa buse avec une faible force, tout en disposant d'une force supérieure pour le décollage du plongeur plat de l'électroaimant.

La mise en place de cette vanne est très simple et rapide du fait du pas de vis autotaraudant, de la fixation par retenue, par baïonnette ou de la fixation par une plaquette supérieure. Cette électrovanne se présentant donc sous la forme d'une cartouche indémontable est simple, peu onéreuse, et peut se placer très près de l'utilisation du fluide.

## Revendications

1. Electrovanne comportant un électroaimant (1,2) à plongeur plat (3) ne pénétrant pas à l'intérieur du noyau fixe (1) ni de la bobine (2); dont la bobine (2) et sa connexion électrique sont intégrées dans le noyau fixe (1); comportant une bague intermédiaire (10), munie d'un épaulement intérieur (12) servant à retenir un ressort de rappel (13); dont cette bague (10) est solidaire du noyau fixe (1) et d'un corps (16) comportant une buse; dont le plongeur (3) présente une surface plane, et dont le ressort plat (13) est fixé en son centre entre le plongeur (3) et un support (14) portant le clapet (15) servant à étancher la buse (20) lorsque la vanne est en position fermée, et dont la périphérie est contre l'épaulement (12) de la bague intermédiaire (10).

2. Electrovanne selon la revendication 1, **caractérisée par le fait que** le circuit magnétique (1) et la bague intermédiaire (10) sont fabriqués en une seule pièce.

3. Electrovanne selon l'une des revendications précédentes, **caractérisée par le fait que** le corps (16) est en matière plastique, la bague (10) en métal et qu'ils sont fixés l'un à l'autre par un joint de résine placé dans une rainure (17), résine qui adhère chimiquement sur le métal de la bague et retient le corps plastique principalement mécaniquement.

4. Electrovanne selon l'une des revendications précédentes, **caractérisée par le fait que** les extrémités des fils de la bobine sont enroulés sur des picots (5) avant son introduction dans le circuit magnétique (1), picots qui servent à connecter électriquement la vanne.

5. Electrovanne selon l'une des revendications précédentes, **caractérisée par le fait qu'**une gorge est ménagée entre une face terminale de la bague intermédiaire (10) et un épaulement (6) que présente la surface cylindrique externe du noyau fixe (1) de l'électroaimant, et **par le fait que** cette gorge est munie d'un joint d'étanchéité 11.

6. Electrovanne selon l'une des revendications précédentes, **caractérisée par le fait que** le plongeur plat (3) coulisse axialement dans la bague intermédiaire (10) et **par le fait qu'**il est relié à celle-ci par un ressort plat (13) en forme de disque présentant un trou central (22) et deux bras de flexion reliés ou non reliés (38).

7. Electrovanne selon la revendication 4, **caractérisée par le fait que** l'électroaimant comporte un noyau fixe (1) et une bobine (2) fixée au noyau fixe (1) par un élément isolant (4) portant les picots (5) auxquels sont fixées les extrémités des fils de la bobine (2).

8. Electrovanne selon l'une des revendications précédentes, **caractérisée par le fait que** les pièces métalliques en contact avec le fluide sont munies d'un film protecteur.

9. Electrovanne selon l'une des revendications précédentes, **caractérisée par le fait que** la surface cylindrique externe de l'électroaimant (1,2) comporte un filetage (7).

10. Electrovanne selon la revendication 9, **caractérisée par le fait que** le filetage (7) est autotaraudant.

11. Electrovanne selon l'une des revendications précédentes, **caractérisée par le fait que** le circuit magnétique (1) comporte une empreinte femelle de section non circulaire débouchant sur sa surface supérieure libre.

12. Electrovanne selon l'une des revendications précédentes, **caractérisée par le fait que** la bobine (2) est protégée du fluide par un joint de résine (24).

13. Electrovanne selon la revendication 12, **caractérisée par le fait que** le joint (24) est réalisé par une résine réagissant à la lumière.

14. Electrovanne selon l'une des revendications précédentes, **caractérisée par le fait que** la bobine (2) est protégée du fluide par un joint en matière élastomère (25) collé contre la bobine (2).

15. Electrovanne selon l'une des revendications précédentes, **caractérisée par le fait qu'**une pièce plastique (26) protégeant les soudures des fils de la bobine (2) sur les picots est placée sur le circuit magnétique (1), cette pièce (26) présentant un organe de retenue (41).

16. Electrovanne selon l'une des revendications précédentes, **caractérisée par le fait qu'**elle comporte un épaulement radial (17) placé sur la bague (10) ou sur le circuit magnétique (1), pour permettre la fixation de la valve à une embase pneumatique.

17. Electrovanne selon l'une des revendications 1 à 15, **caractérisée par le fait qu'**elle comporte un épaulement radial partiel (17) placé sur la bague (10), sur le corps ou sur le circuit magnétique (1), pour permettre une fixation par baïonnette de la valve à son embase.

18. Electrovanne selon l'une des revendications 1 à 15, **caractérisée par le fait que** la vanne est maintenue contre son embase pneumatique par une force axiale appliquée par un élément (28) prenant appui sur la partie supérieure du circuit magnétique (1).

19. Electrovanne selon l'une des revendications précédentes, **caractérisée par le fait que** les picots (2) sont soudés sur une plaquette électronique (30) comportant deux électrodes (31) et que la connexion électrique externe de la bobine est réalisée par des contacteurs ressorts (32).

20. Electrovanne selon la revendication 19, **caractérisée par le fait que** les contacteurs électriques (32) sont placés sur une carte électronique (33) et que la carte électronique retient à travers un élément (28) la vanne sur son embase pneumatique.

21. Electrovanne selon l'une des revendications précédentes, **caractérisée par le fait qu'**une membrane (36) assure l'étanchéité entre la bague intermédiaire (10) et le support de clapet (14); et **par le fait qu'**un trou (35) est percé au centre du support du clapet (14).

22. Electrovanne selon l'une des revendications précédentes, **caractérisée par le fait que** le ressort plat (13) est dimensionné afin de permettre à la vanne de fonctionner en régime dit "proportionnel".

23. Electrovanne selon l'une des revendications précédentes, **caractérisée par le fait que** son débit est fonction du courant électrique traversant la bobine (2).

24. Electrovanne selon l'une des revendications précédentes, **caractérisée par le fait que** le clapet est monté coulissant dans le support de clapet (14) et soumis à l'action d'un ressort de rappel (34).

25. Electrovanne selon l'une des revendications précédentes, **caractérisée par le fait qu'**elle est fixée sur son embase directement à l'aide d'une pièce active de l'électroaimant, circuit magnétique (1) ou bague (10).

26. Electrovanne selon l'une des revendications précédentes, **caractérisée par le fait que** la bobine (2) ne possède pas d'âme de bobine, qu'elle est autoportée ou thermocollée.

27. Electrovanne selon l'une des revendications précédentes, **caractérisée par le fait qu'**une membrane de séparation est intégrée dans le corps de la vanne (16), séparant l'activateur électromagnétique du fluide.

28. Electrovanne selon la revendication 8, **caractérisée par le fait que** le film protecteur est en DLC (carbone amorphe), ou en polymère ou en céramique.

## Patentansprüche

1. Magnetventil mit einem Elektromagneten (1, 2) mit flachem Kolben (3), der weder in das Innere des feststehenden Magnetkerns (1) noch in das der Spule (2) eintaucht; dessen Spule (2) und deren elektrische Anschlüsse in den feststehenden Magnetkern (1) integriert sind; das einen Zwischenring (10) umfasst, der mit einem inneren Vorsprung (12) versehen ist, der dazu dient, eine Rückstellfeder (13) zu halten; wobei dieser Ring (10) fest mit dem feststehenden Magnetkern (1) und mit einem Körper (16) verbunden ist, der eine Düse umfasst; der Kolben (3) eine flache Seite aufweist und die flache Feder (13) in ihrer Mitte zwischen dem Kolben (3) und einer Stütze (14) befestigt ist, die die Klappe (15) trägt, die dazu dient, die Düse (20) dicht zu verschliessen, wenn sich das Ventil in seiner geschlossenen Stellung befindet; und deren Umfang am Vorsprung (12) des Zwischenrings (10) ruht.

2. Magnetventil nach Anspruch 1, **dadurch gekennzeichnet, dass** der magnetische Kreis (1) und der Zwischenring (10) aus einem einzigen Teil hergestellt sind.

3. Magnetventil nach einem der vorangehenden Ansprüche, **dadurch gekennzeichnet, dass** der Körper (16) aus Kunststoff, der Ring (10) aus Metall besteht und diese Teile durch eine Kunstharzdichtung aneinander befestigt sind, die in einer Riefe (17) sitzt, wobei das Kunstharz chemisch am Metall des Rings anhaftet und den Kunststoffkörper hauptsächlich mechanisch hält.

4. Magnetventil nach einem der vorangehenden Ansprüche, **dadurch gekennzeichnet, dass** die Enden der Drähte der Spule auf Spitzen (5) gewickelt werden, bevor sie in den magnetischen Kreis (1) eingesetzt wird, wobei die Spitzen (5) dazu dienen, das Ventil elektrisch anzuschliessen.

5. Magnetventil nach einem der vorangehenden Ansprüche, **dadurch gekennzeichnet, dass** eine Auskehlung zwischen einer Endfläche des Zwischenrings (10) und einem Vorsprung (6) angebracht ist, der auf der zylindrischen Aussenseite des feststehenden Magnetkerns (1) des Elektromagneten sitzt, und dadurch, dass diese Auskehlung mit einem Dichtungsring 11 versehen ist.

6. Magnetventil nach einem der vorangehenden Ansprüche, **dadurch gekennzeichnet, dass** der flache Kolben (3) axial im Zwischenring (10) gleitet, und dadurch, dass er mit diesem Ring durch eine Flachfeder (13) in Gestalt einer Scheibe mit einem zentralen Loch (22) und zwei verbundenen oder losen Federarmen (38) verbunden ist.

7. Magnetventil nach Anspruch 4, **dadurch gekennzeichnet, dass** der Elektromagnet einen feststehenden Magnetkern (1) sowie eine Spule (2) umfasst, die am feststehenden Magnetkern (1) über ein isolierendes Element (4) befestigt ist, das die Spitzen (5) trägt, an denen die Enden der Drähte der Spule (2) befestigt sind.

8. Magnetventil nach einem der vorangehenden Ansprüche, **dadurch gekennzeichnet, dass** die Metallteile, die mit dem Fluid in Berührung kommen, mit einer Schutzschicht versehen sind.

9. Magnetventil nach einem der vorangehenden Ansprüche, **dadurch gekennzeichnet, dass** die zylindrische Aussenseite des Elektromagneten (1, 2) ein Gewinde (7) umfasst.

10. Magnetventil nach Anspruch 9, **dadurch gekennzeichnet, dass** das Gewinde (7) selbstschneidend ist.

11. Magnetventil nach einem der vorangehenden Ansprüche, **dadurch gekennzeichnet, dass** der magnetische Kreis (1) eine Einsenkung von nicht kreisförmigem Querschnitt umfasst, die auf seiner freien Oberfläche mündet.

12. Magnetventil nach einem der vorangehenden Ansprüche, **dadurch gekennzeichnet, dass** die Spule (2) durch eine Kunstharzdichtung (24) vor dem Fluid geschützt wird.

13. Magnetventil nach Anspruch 12, **dadurch gekennzeichnet, dass** die Dichtung (24) aus einem Kunstharz besteht, das am Licht reagiert.

14. Magnetventil nach einem der vorangehenden Ansprüche, **dadurch gekennzeichnet, dass** die Spule (2) vor dem Fluid durch eine Dichtung aus elastomerem Material (25) geschützt wird, das auf die Spule (2) aufgeklebt ist.

15. Magnetventil nach einem der vorangehenden Ansprüche, **dadurch gekennzeichnet, dass** ein die Lötstellen der Drähte der Spule (2) auf den Spitzen schützendes Kunststoffteil (26) auf den magnetischen Kreis (1) aufgesetzt ist, wobei dieses Teil (26) ein Halteorgan (41) aufweist.

16. Magnetventil nach einem der vorangehenden Ansprüche, **dadurch gekennzeichnet, dass** es einen radialen Vorsprung (17) umfasst, der auf dem Ring (10) oder auf dem magnetischen Kreis (1) sitzt, um die Befestigung des Ventils auf einer Saugplatte zu ermöglichen.

17. Magnetventil nach einem der Ansprüche 1 bis 15, **dadurch gekennzeichnet, dass** es einen partiellen radialen Vorsprung (17) umfasst, der auf dem Ring (10), dem Körper oder dem magnetischen Kreis (1) sitzt, um eine bajonettverschlussartige Befestigung des Ventils an seinem Sockel zu ermöglichen.

18. Magnetventil nach einem der Ansprüche 1 bis 15, **dadurch gekennzeichnet, dass** das Ventil an seiner Saugplatte durch eine axiale Kraft gehalten wird, die durch ein Element (28) angelegt wird, das auf dem oberen Teil des magnetischen Kreises (1) ruht.

19. Magnetventil nach einem der vorangehenden Ansprüche, **dadurch gekennzeichnet, dass** die Spitzen (2) auf eine Leiterplatte (30) aufgeschweisst sind, die zwei Elektroden (31) umfasst, und dadurch, dass der elektrische Aussenanschluss der Spule über Federkontakte (32) erfolgt.

20. Magnetventil nach Anspruch 19, **dadurch gekennzeichnet, dass** die elektrischen Kontakte (32) auf einer elektronischen Karte (33) sitzen, und dadurch, dass die elektronische Karte das Ventil über ein Element (28) auf seiner Saugplatte hält.

21. Magnetventil nach einem der vorangehenden Ansprüche, **dadurch gekennzeichnet, dass** eine Membran (36) den dichten Abschluss zwischen dem Zwischenring (10) und dem Klappenträger (14) gewährleistet; und dadurch, dass ein Loch (35) in der Mitte des Klappenträgers (14) gebohrt ist.

22. Magnetventil nach einem der vorangehenden Ansprüche, **dadurch gekennzeichnet, dass** die Flachfeder (13) so bemessen ist, dass das Ventil als ein Proportionalventil funktionieren kann.

23. Magnetventil nach einem der vorangehenden Ansprüche, **dadurch gekennzeichnet, dass** sein Durchsatz von dem durch die Spule (2) gehenden Strom abhängt.

24. Magnetventil nach einem der vorangehenden Ansprüche, **dadurch gekennzeichnet, dass** die Klappe gleitend in den Klappenträger (14) montiert und der Wirkung einer Rückstellfeder (34) unterworfen ist.

25. Magnetventil nach einem der vorangehenden Ansprüche, **dadurch gekennzeichnet, dass** es mit Hilfe eines aktiven Teils des Elektromagneten, des magnetischen Kreises (1) oder des Rings (10), direkt auf seinem Sockel befestigt ist.

26. Magnetventil nach einem der vorangehenden Ansprüche, **dadurch gekennzeichnet, dass** die Spule (2) keinen Kern besitzt und dass sie selbsttragend oder heissgeklebt ist.

27. Magnetventil nach einem der vorangehenden Ansprüche, **dadurch gekennzeichnet, dass** eine Trennmembran, die den elektromagnetischen Aktivator vom Fluid trennt, in den Ventilkörper (16) integriert ist.

28. Magnetventil nach Anspruch 8, **dadurch gekennzeichnet, dass** die Schutzschicht aus DLC (amorphem Kohlenstoff), aus einem Polymer oder aus Keramik besteht.

## Claims

1. A solenoid valve comprising an electromagnet (1, 2) having a flat plunger (3) that does not penetrate into the inside of the stationary core (1) nor of the coil (2); in which the coil (2) and its electrical connection are integrated in the stationary core (1); including an intermediate ring (10), provided with an inner shoulder (12) serving to retain a return spring (13); in which said ring (10) is secured to the stationary core (1) and to a body (16) including a nozzle; in which the plunger (3) presents a plane surface; and in which the flat spring (13) has its center secured between the plunger (3) and a support (14) carrying the valve member (15) used for sealing the nozzle (20) when the valve is in the closed position, and has its periphery against the shoulder (12) of the intermediate ring (10).

2. A solenoid valve according to claim 1, **characterized by** the fact that the magnetic circuit (1) and the intermediate ring (10) are made as a single piece.

3. A solenoid valve according to either preceding claim, **characterized by** the fact that the body (16) is made of plastics material, the ring (10) of metal, and they are fixed to each other by a resin gasket placed in a groove (17), which resin bonds chemically to the metal of the ring and holds the plastics body mainly mechanically.

4. A solenoid valve according to any preceding claim, **characterized by** the fact that the ends of the wires of the coil are wound on pegs (5) prior to being inserted into the magnetic circuit (1), which pegs are used for electrically connecting the valve.

5. A solenoid valve according to any preceding claim, **characterized by** the fact that a groove is formed between an end face of the intermediate ring (10) and a shoulder (6) present on the outer cylindrical surface of the stationary core (1) of the electromagnet, and by the fact that said groove is provided with a sealing gasket (11).

6. A solenoid valve according to any preceding claim, **characterized by** the fact that the flat plunger (3) slides axially in the intermediate ring (10), and by the fact that it is connected thereto by a flat spring (13) in the form of a disk presenting a central hole (22) and two bending arms (38) that are connected or not connected.

7. A solenoid valve according to claim 4, **characterized by** the fact that the electromagnet comprises a stationary core (1) and a coil (2) secured to the stationary core (1) by an insulating element (4) carrying the pegs (5) to which the ends of the wires of the coil (2) are secured.

8. A solenoid valve according to any preceding claim, **characterized by** the fact that the metal parts in contact with the fluid are provided with a protective film.

9. A solenoid valve according to any preceding claim, **characterized by** the fact the outer cylindrical surface of the electromagnet (1, 2) includes a thread (7).

10. A solenoid valve according to claim 9, **characterized by** the fact that the thread (10) is a self-tapping thread.

11. A solenoid valve according to any preceding claim, **characterized by** the fact that the magnetic circuit (1) includes a female indentation of non-circular section opening out to its free top surface.

12. A solenoid valve according to any preceding claim, **characterized by** the fact that the coil (2) is protected from the fluid by a resin gasket (24).

13. A solenoid valve according to claim 12, **characterized by** the fact that the gasket (24) is made out of a resin that reacts to light.

14. A solenoid valve according to any preceding claim, **characterized by** the fact that the coil (2) is protected from the fluid by a gasket (25) of elastomer material stuck against the coil (2).

15. A solenoid valve according to any preceding claim, **characterized by** the fact that a plastics part (26) protecting the bonding of the coil wires (2) to the pegs is placed on the magnetic circuit (1), said part (26) presenting a retaining member (41).

16. A solenoid valve according to any preceding claim, **characterized by** the fact that it includes a radial shoulder (17) placed on the ring (10) or on the magnetic circuit (1), to enable the valve to be secured to a pneumatic base.

17. A solenoid valve according to any one of claims 1 to 15, **characterized by** the fact that it includes a partial radial shoulder (17) placed on the ring (10), on the body, or on the magnetic circuit (1), in order to enable the valve to be secured to its base by a bayonet fastening.

18. A solenoid valve according to any one of claims 1 to 15, **characterized by** the fact that the valve is held against its pneumatic base via an axial force applied by an element (28) bearing against the top portion of the magnetic circuit (1).

19. A solenoid valve according to any preceding claim, **characterized by** the fact that the pegs (5) are soldered to an electronic circuit plate (30) having two electrodes (31) and that the external electrical connection of the coil takes place via contactor springs (32).

20. A solenoid valve according to claim 19, **characterized by** the fact that the electrical contactor springs (32) are placed on an electronics card (33) and the electronics card acts via an element (28) to hold the valve on its pneumatic base.

21. A solenoid valve according to any preceding claim, **characterized by** the fact that a diaphragm (36) provides sealing between the intermediate ring (10) and the valve-member support (14); and by the fact that a hole (35) is pierced through the center of the valve-member support (14).

22. A solenoid valve according to any preceding claim, **characterized by** the fact that the flat spring (13) is dimensioned so as to enable the valve to operate under so-called "proportional" conditions.

23. A solenoid valve according to any preceding claim, **characterized by** the fact that its flow rate is a function of the electric current carried by the coil (2).

24. A solenoid valve according to any preceding claim, **characterized by** the fact that the valve member is mounted to slide in the valve-member support (14) and is subjected to the action of a return spring (34).

25. A solenoid valve according to any preceding claim, **characterized by** the fact that it is secured to its base directly by means of an active part of the electromagnet, its magnetic circuit (1), or the ring (10).

26. A solenoid valve according to any preceding claim, **characterized by** the fact that the coil (2) does not possess a coil former, that it is self-supporting or thermobonded.

27. A solenoid valve according to any preceding claim, **characterized by** the fact that a separator diaphragm integrated in the valve body (16), separating the electromagnetic actuator from the fluid.

28. A solenoid valve according to claim 8, **characterized by** the fact that the protective film is made of diamond-like carbon (DLC), or of polymer, or of ceramic.
